# EUROPÄISCHE PATENTSCHRIFT

(11) **EP 2 419 980 B1**
(45) Veröffentlichungstag und Bekanntmachung des Hinweises auf die Patenterteilung: **01.06.2016**
(21) Anmeldenummer: 10714453.7
(22) Anmeldetag: 15.04.2010
(51) Int. Cl.: H02G 11/00, H02G 3/04

(54) **ENERGIEFÜHRUNGSKETTE**
ENERGY GUIDING CHAIN
CHAÎNE DE GUIDAGE D'ÉNERGIE

(30) Priorität: 17.04.2009 DE 202009005650 U
(43) Veröffentlichungstag der Anmeldung: 22.02.2012
(73) Patentinhaber: Igus GmbH, 51147 Köln (DE)
(72) Erfinder: JAEKER, Thilo-Alexander, 53757 Sankt Augustin (DE); HERMEY, Andreas, 53773 Hennef (DE); STRACK, Stefan, 53639 Königswinter (DE); OFFNER, Michael, 85748 Garching b. München (DE)
(74) Vertreter: Lippert, Hans-Joachim
(86) Internationale Anmeldenummer: PCT/EP2010/054981
(87) Internationale Veröffentlichungsnummer: WO 2010/119104

(56) Entgegenhaltungen:
- DE-A1- 3 613 431
- DE-A1- 19 710 489
- DE-C1- 4 302 757
- JP-A- 2 163 545

## Beschreibung

Die Erfindung betrifft eine Energieführungskette zur Führung von Kabeln, Schläuchen und dergleichen zwischen zwei relativ zueinander beweglichen Anschlusspunkten mit einer Anzahl gelenkig miteinander verbundener rohrförmiger Kettenglieder die je eine Bodenwand, daran seitlich anschließende gegenüberliegende Seitenwände und eine Deckelwand aufweisen, wobei die Deckelwand abnehmbar mit den Seitenwänden verbunden ist, die Seitenwände jeweils einen Gelenkzapfen und eine Gelenköffnung zur gelenkigen Verbindung benachbarter Kettenglieder aufweisen, der Verschwenkwinkel in beiden Schwenkrichtungen durch Anschläge begrenzt ist, die Deckelwände, Seitenwände und Bodenwände benachbarter Kettenglieder sich teleskopartig über den gesamten Verschwenkwinkel überlappen, und die Bereiche der Deckelwand und Bodenwand, die teleskopartig die Deckelwand bzw. Bodenwand eines benachbarten Kettenglieds nach außen überlappen, als Abstreifer ausgebildet sind, die auf der Deckelwand bzw. Bodenwand des benachbarten Kettenglieds anliegen.

Derartige weitgehend geschlossene Energieführungsketten werden in einer Umgebung eingesetzt, in der die Gefahr besteht, dass Fremdkörper in die Kette eindringen können, wie z. B. in Werkzeugmaschinen, insbesondere Maschinen zur spanenden Bearbeitung von Metallkörpern, in denen Späne auf die Oberfläche der Energieführungsketten fallen und zwischen den Kettengliedern bei deren Verschwenkung in den Umlenkbogen oder aus dem Umlenkbogen heraus in den Innenraum eindringen können.

Um mit möglichst wenigen Teilen und somit Verbindungsstellen auszukommen, kann die Bodenwand einstückig mit den Seitenwänden geformt sein.

Eine Energieführungskette der eingangs genannten Art ist aus der DE 36 13 431 A1 bekannt. Bei dieser Kette überlappen sich die Deckelwände und Bodenwände aufeinander folgender Kettenglieder teleskopartig. In Verbindung mit der abgekröpften Ausbildung der Seitenwände entsteht ein rohrförmig geschlossener Innenraum, der weitgehend gegen das Eindringen von Schmutz und Spritzwasser geschützt ist.

Trotz der bekannten geschlossenen Gestaltung der Kette können Fremdkörper mit scharfen Kanten, wie z. B. Späne, an den Oberflächen der Kettenglieder hängenbleiben und beim Verfahren der Energieführungskette zwischen die sich überlappenden Ränder benachbarter Kettenglieder gelangen, wo sie zu Beschädigungen der sich überlappenden Bereiche führen und von wo aus sie sich ins Ketteninnere vorarbeiten können.

Bei der bekannten Energieführungskette sind die Deckelwände an ihren zu den Seitenwänden weisenden Seiten über federnde Haltearme mit an den Seitenwänden nach innen vorstehenden Halteblöcken rastend befestigt. Aufgrund von Spannungen, die durch die Rastverbindung auf die Deckelwände im Bereich ihrer Haltearme übertragen werden, und/oder Fertigungstoleranzen bezüglich der linearen Ausrichtung der Deckelwände, insbesondere der als Abstreifer ausgebildeten Bereiche, quer zur Längsrichtung der Energieführungskette können undichte Stellen zwischen den Abstreifern und den von ihnen überlappten Deckelwandbereichen benachbarter Kettenglieder entstehen.Der Erfindung liegt daher die Aufgabe zugrunde, eine Energieführungskette der eingangs genannten Art so weiterzubilden, dass das Eindringen von Fremdkörpern in den Ketteninnenraum noch besser vermieden werden kann.

Die Aufgabe wird erfindungsgemäß dadurch gelöst, dass die Oberfläche der Deckelwände und der Bodenwände, einschließlich ihrer als Abstreifer ausgebildeten Bereiche, und zumindest der Übergangszonen zwischen diesen Wänden und den Seitenwänden in Umfangsrichtung der rohrförmigen Kettenglieder konvex gekrümmt sind.

Insbesondere kann vorgesehen sein, dass die gesamte Oberfläche der rohrförmigen Kettenglieder als eine in Umfangsrichtung konvex gekrümmte Fläche ausgebildet ist.

Dabei kann der Krümmungsradius im Bereich der Seitenwände, Deckelwand, Bodenwand und der Übergangszonen zwischen den Wänden variieren, so dass annähernd eine Kastenform der Kettenglieder mit gebogenen Wänden gegeben ist.

Aufgrund der Krümmung in Umfangsrichtung, insbesondere der Deckelwand, der Bodenwand und der Übergangszonen zwischen diesen Wänden und den Seitenwänden können sich Fremdkörper nicht so leicht festsetzen wie auf flachen Bereichen, auf denen sie sich besser absetzen können. Beim Verfahren der Energieführungskette können auf den gekrümmten Flächen dennoch sich ablagernde Fremdkörper leichter abfallen.

Da gemäß der vorliegenden Erfindung insbesondere auch die als Abstreifer ausgebildeten Bereiche und die von diesen bei benachbarten Kettenglieder überlappten Bereiche der Deckel- und Bodenwände in Umfangsrichtung der Kettenglieder gekrümmt ausgebildet sind, hat sich herausgestellt, dass bei Anlage der gekrümmten Abstreifer an die gekrümmten Deckel- und Bodenwände benachbarter Kettenglieder unterschiedliche Krümmungen aufgrund von Spannungen und Fertigungstoleranzen entschieden besser ausgeglichen werden können als bei flach verlaufenden Überlappungsbereichen, wie sie aus dem Stand der Technik bei Abstreifern bekannt sind.

Bevorzugt ist vorgesehen, dass die Außenseiten der sich teleskopartig überlappenden Bereiche der Kettenglieder in Schnitten senkrecht zu den Verschwenkachsen der Gelenkzapfen und -öffnungen zu diesen im Wesentlichen konzentrische Krümmungen aufweisen. Diese können sich zumindest über den gesamten Verschwenkwinkel erstrecken.

Durch die nicht nur in Umfangsrichtung der rohrförmigen Kettenglieder sondern auch senkrecht zu den Verschwenkachsen sondern auch vorgesehene Oberflächenkrümmung wird ein leichteres Abrutschen von Fremdkörpern auch in Längsrichtung der Kette ermöglicht.

In einer bevorzugten Weiterbildung der Erfindung ist die Oberfläche der Kettenglieder als eine in allen Richtungen stetig gekrümmte Fläche ausgebildet.

Bei dieser Gestaltung wird die Ausbildung jeglicher Kanten vermieden, an denen sich Fremdkörper festsetzen können. Da die Oberfläche keine flachen Bereiche aufweist, fallen eventuell auf die Oberfläche auftreffende Fremdkörper umso leichter von der Energieführungskette ab.

Die als Abstreifer dienenden Bereiche der Deckel- und Bodenwand können unter einer Vorspannung an der Deckelwand bzw. Bodenwand des benachbarten Kettenglieds anliegen.

Die Deckelwand und gegebenenfalls auch die Bodenwand, sollte diese separat ausgebildet sein, können bevorzugt ebenfalls unter einer Vorspannung, an den Seitenwänden anliegen.

Die genannten Maßnahmen tragen dazu bei, dass Fremdkörper und Flüssigkeiten weitestgehend daran gehindert werden, in das Innere der Energieführungskette einzudringen.

Zu diesem Zweck kann auch die Maßnahme beitragen, dass die sich teleskopartig überlappenden Flächen der Kettenglieder in Schnitten senkrecht zu den Verschwenkachsen der Gelenkzapfen und -öffnungen zu diesen im Wesentlichen konzentrische Krümmungen aufweisen, die sich zumindest über den gesamten Verschwenkwinkel erstrecken.

In einer bevorzugten Ausführung sind die Verbindungsbereiche zwischen den Seitenwänden und der Deckelwand eines Kettenglieds als Nut-Feder-Verbindung ausgebildet. Eine derartige Verbindung hat den Vorteil, dass Schmutz und andere Fremdkörper zusätzlich daran gehindert werden, durch die Verbindungsbereiche in den Innenraum der Energieführungskette zu gelangen.

Als bevorzugte Alternative kann vorgesehen sein, dass sich die aneinander anliegenden Randabschnitte der Seitenwände und der Deckelwand stufenweise überkragen. Auch diese Ausgestaltung der Randabschnitte vermeidet zusätzlich das Eindringen von Schmutz und anderen Fremdkörpern in das Innere der Kette.

In einer vorteilhaften Ausbildung der Erfindung weisen die Deckelwände sich von ihren Seitenrändern zu den Seitenwänden herab erstreckende Befestigungslaschen auf, die lösbar mit den Seitenwänden verbindbar sind.

Als Verbindung kann insbesondere eine Rastverbindung zwischen den Befestigungslaschen und den Seitenwänden des Kettenglieds vorgesehen sein.

Die Befestigungslaschen können an ihrer Innenseite einen Vorsprung aufweisen, der in eine an der betreffenden Seitenwand angeordnete, nach außen offene Ausnehmung rastend eingreift, wobei die Außenseite der Befestigungslasche fluchtend mit dem Rand der Ausnehmung ausgebildet ist.

Zur rastenden Verbindung kann die Ausnehmung eine Rastnase aufweisen, unter die der Vorsprung greift.

Die Rastverbindung ist bevorzugt derart ausgebildet, dass die Deckelwand unter einer Vorspannung auf der betreffenden Seitenwand aufliegt. Die Vorspannung trägt ebenfalls dazu bei, dass kein Schmutz und keine anderen Fremdkörper zwischen der Deckelwand und der betreffenden Seitenwand in das Ketteninnere eindringen.

Zum Öffnen der Rastverbindung kann vorgesehen sein, dass an der Außenseite der Befestigungslasche eine Nut ausgebildet ist, die von der Seite der Deckelwand sich schräg von außen in den Vorsprung hineinerstreckt und die zum Eingriff eines Werkzeugs ausgelegt ist, mit dem die Rastverbindung zwischen der Befestigungslasche und der Seitenwand durch Aufhebeln lösbar ist. Beim nach unten Drücken des Werkzeugs wird ein Drehmoment auf den Vorsprung ausgeübt, der seinen unter die Rastnase greifenden Bereich nach außen schwenkt, so dass die Rastverbindung sich leicht lösen kann.

Bei einer anderen Ausführung der Verbindung zwischen der Deckelwand und den beiden Seitenwänden eines Kettenglieds ist vorgesehen, dass die Befestigungslaschen jeweils in eine zur Deckelwand offene Ausnehmung in den Seitenwänden eingreifen. Darin können die Befestigungslaschen derart befestigbar sein, dass die Deckelwand unter einer Vorspannung auf den Seitenwänden aufliegt.

In einer bevorzugten Ausbildung dieser Verbindungsart ist in der innen liegenden Fläche der Ausnehmung eine senkrecht in die betreffenden Seitenwand eingelassene Öffnung vorgesehen, in die ein im Wesentlichen rotationssymmetrisches Verschlussteil mit einem zentralen Vorsprung lösbar einrastbar ist. Das Verschlussteil kann von außen in eine Durchgangsöffnung zur Ausnehmung eingesetzt werden, wobei seine nach außen weisende Stirnfläche fluchtend mit dem Rand der Durchgangsöffnung ausgebildet ist. Seine nach innen weisende Stirnfläche kann in einem Abstand von der innen liegenden Fläche der Ausnehmung angeordnet sein, wobei zwischen diese Fläche und die nach innen weisende Stirnfläche des Verschlussteils ein Bereich der in die Ausnehmung eingesetzten Befestigungslasche greift. An diesem Bereich und der nach innen weisenden Stirnfläche des Verschlussteils können ein Nocken und eine Nockenführung derart miteinander in Eingriff stehen, dass bei Drehung des Verschlussteils in Verschlussrichtung die Befestigungslasche mit einer zunehmenden Vorspannung in Richtung auf die Bodenwand hin gezogen wird.

Der Nocken kann in Form einer konzentrisch an der nach innen weisenden Stirnfläche des Verschlussteils angeordneten Nockenkurve ausgebildet sein, die sich in Verschlussrichtung verjüngt, wobei die Nockenführung als exzentrisch zur Öffnung angeordnete Nut ausgebildet ist, die sich ebenfalls in Verschlussrichtung verjüngt. In einer einfacheren Gestaltung kann sich entweder die Nockenkurve oder die Nockenführung in Verschlussrichtung verjüngen.

Als Alternative zur vorstehend beschriebenen Ausführung kann vorgesehen sein, dass die Nockenkurve exzentrisch und die mit dieser zusammen wirkende Nut konzentrisch ausgebildet sind.

In einer weiteren bevorzugten Ausbildung ist der Vorsprung des Verschlussteils im Wesentlichen zylindrisch ausgebildet und an seinem freien Ende druckknopfartig in der Öffnung an der Innenseite der Ausnehmung verrastbar. Bevorzugt ist der Nocken bzw. die Nockenführung in der Öffnungsposition an der von der Deckelwand wegweisenden Hälfte der Stirnseite des Verschlussteils unterhalb des Vorsprungs angeordnet. Die Befestigungslasche kann an ihrem freien Ende eine teilkreisförmige Nut aufweisen, mit der sie auf den Vorsprung des Verschlussteils aufsetzbar ist, wobei die an dem betreffenden Bereich der Befestigungslasche vorgesehene Nockenführung bzw. der Nocken oberhalb der teilkreisförmigen Nut angeordnet ist. Bei dieser Ausführung kann die Befestigungslasche in die Ausnehmung in der betreffenden Seitenwand von oben eingesetzt werden, nachdem das Verschlussteil in die Durchgangsöffnung in der Seitenwand eingesetzt und mit seinem Vorsprung an der innen liegenden Fläche der Ausnehmung verrastet wurde. In der Öffnungsposition können der Nocken und die Nockenführung so zueinander angeordnet sein, dass durch Drehen des Verschlussteils in Verschlussrichtung der Nocken in die Nockenführung einführbar ist.

In einer bevorzugten Weiterbildung dieser Ausführung ist der Nocken am Verschlussteil angebracht und die Befestigungslasche plattenförmig ausgebildet, wobei die Nockenführung in der Befestigungslasche ausgehend von deren freiem Ende um die teilkreisförmige Nut herum ausgebildet ist.

An der nach außen weisenden Stirnseite des Verschlussteils kann zweckmäßigerweise eine Ausnehmung zum Eingriff eines Werkzeugs vorgesehen sein, mit dem das Verschlussteil drehbar ist. Als Werkzeug kann z. B. ein Schraubenzieher vorgesehen sein. Selbstverständlich kommt auch die zu den vorstehend beschriebenen Ausführungen umgekehrte Konstruktion in Betracht, bei der die Befestigungslaschen an den Seitenwänden zur Deckelwand weisen und in diesen lösbar befestigbar sind.

Zwei Ausführungsbeispiele der Erfindung werden im Folgenden anhand der Zeichnung näher beschrieben.

In der Zeichnung zeigen:
- Fig. 1: eine perspektivische Ansicht eines aus drei Kettengliedern bestehenden Abschnitts eines ersten Ausführungsbeispiels einer Energieführungskette,
- Fig. 2: einen Längsschnitt durch den in Fig. 1 dargestellten Abschnitt der Energieführungskette mit befestigten Deckelwänden,
- Fig. 3: eine vergrößerte Ansicht des Bereichs C in Fig. 2,
- Fig. 4: eine vergrößerte Ansicht des Bereichs D in Fig. 2,
- Fig. 5: eine vergrößerte Darstellung des Bereichs B in Fig. 1,
- Fig. 6: eine Querschnittsdarstellung des Seitenbereichs mit angehobener Deckelwand des in Fig. 1 links gezeigten Kettenglieds,
- Fig. 7: eine Querschnittsdarstellung des Seitenbereichs mit daran befestigter Deckelwand des in Fig. 1 rechts gezeigten Kettenglieds,
- Fig. 8: eine perspektivische Darstellung eines Abschnitts eines zweiten Ausführungsbeispiels einer Energieführungskette mit angehobener Deckelwand des links gezeigten Kettenglieds,
- Fig. 9: eine vergrößerte Ansicht des Bereichs B in Fig. 8 mit Befestigungslasche und Verschlussteil,
- Fig. 10: eine seitliche Draufsicht auf die Befestigungslasche und Draufsicht auf die nach innen weisende Stirnseite des Verschlussteils und
- Fig. 11: einen Längsschnitt durch den in Fig. 8 gezeigten Abschnitts der Energieführungskette im Bereich der Gelenkzapfen und Befestigungslaschen.

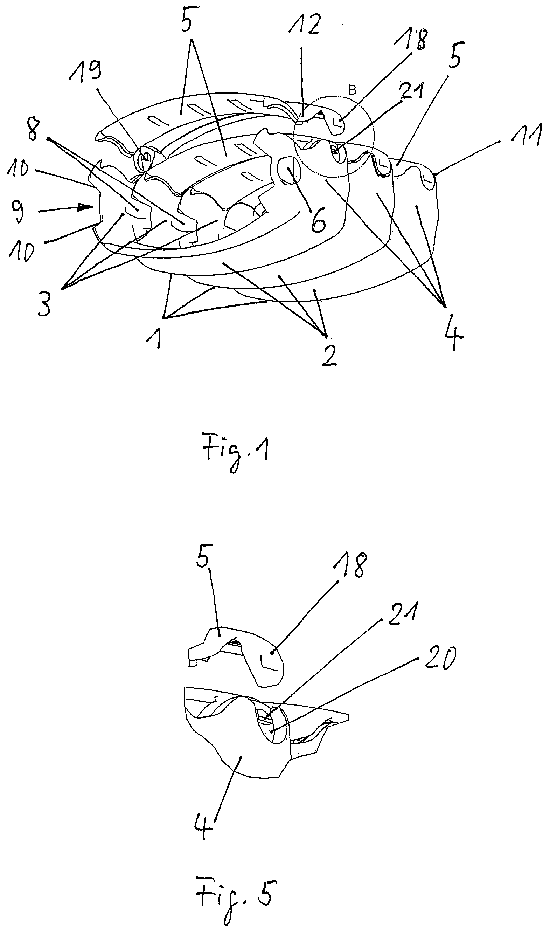

Fig. 1 zeigt ein aus drei rohrförmigen Kettengliedern 1 bestehenden Abschnitt einer Energieführungskette. Jedes Kettenglied 1 besteht aus einer Bodenwand 2, daran seitlich sich anschließenden gegenüber liegenden Seitenwänden 3 und 4 sowie einer Deckelwand 5. Wie bei dem in Fig. 1 links dargestellten Kettenglied 1 zu sehen ist, kann die Deckelwand 5 von den Seitenwänden 3 und 4 zum Einlegen und Entfernen von Kabeln, Schläuchen und dergleichen in den Innenraum der Energieführungskette bzw. aus diesem heraus abgenommen werden. Die Bodenwände 2 sind einstückig mit den Seitenwänden 3 und 4 geformt.

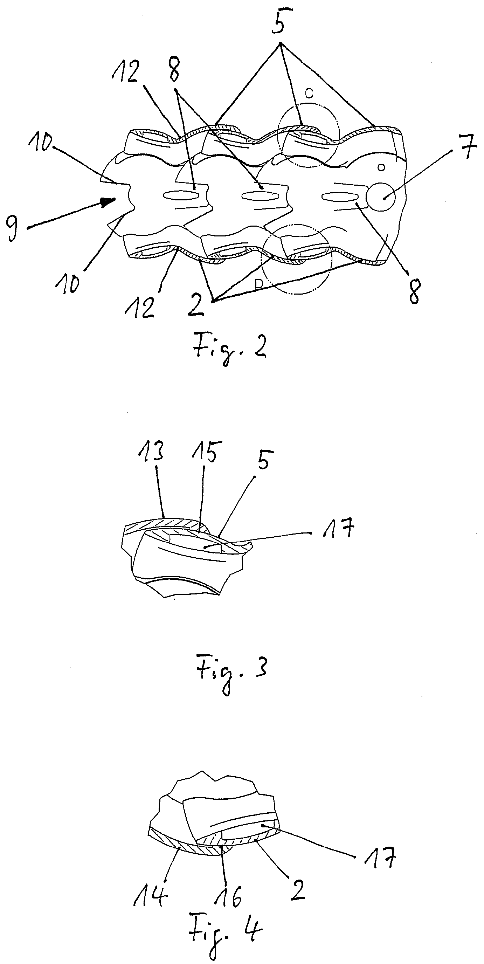

Zur gelenkigen Verbindung der Kettenglieder 1 untereinander weisen diese an einem in Kettenlängsrichtung weisenden Ende nach außen vorstehende Gelenkbolzen 6 und am gegenüberliegenden Ende an ihrer Innenseite ausgebildete Gelenköffnungen 7, wie aus Fig. 2 ersichtlich, auf. Die Gelenköffnungen 7 sind als Sackbohrungen ausgebildet, so dass nach dem Zusammenfügen der Kettenglieder 1 die Gelenkverbindungen von den sich überlappenden Bereichen der Seitenwände 3 und 4 überdeckt sind.

Wie ebenfalls aus den Figuren 1 und 2 ersichtlich ist, sind an den Innenseiten der Seitenwände 3 und 4 Anschläge 8 vorgesehen, die in Ausnehmungen 9 in den Seitenwänden 3 und 4 eines benachbarten Kettenglieds 1 eingreifen und mit Anschlagflächen 10 an den Seitenrändern der Ausnehmungen 9 zusammenwirken, um die Verschwenkung der Kettenglieder 1 in die gestreckte Position, die in den Figuren 1 und 2 gezeigt ist, und aus dieser in die abgewinkelte Position zu begrenzen.

Wie aus Fig. 1 und insbesondere aus der Schnittdarstellung in Fig. 2 hervorgeht, überlappen sich die Deckelwände, Seitenwände und Bodenwände benachbarter Kettenglieder teleskopartig über den gesamten Verschwenkwinkel zwischen den genannten Positionen.

Weiterhin ist aus Fig. 1 ersichtlich, dass die gesamte Oberfläche der rohrförmigen Kettenglieder 1 als eine in Umfangsrichtung konvex gekrümmte Fläche ausgebildet ist. Insbesondere weisen die Deckelwände 5 und die Bodenwände 2 über ihre gesamte Breite eine deutliche konvexe Krümmung auf, während die mittleren Bereiche der Seitenwände 3 und 4 annährend flach mit nur geringer konvexer Krümmung ausgebildet sind. Die Übergangszonen 11 zwischen den Deckelwänden 5 und den Seitenwänden 3 und 4 sowie zwischen den Bodenwänden 2 und den Seitenwänden 3 und 4 weisen eine gleichmäßige starke Krümmung mit etwa gleichem Radius auf. Die konvex gekrümmten Oberseiten der Deckelwände 5, Bodenwände 2 und Übergangszonen 11 sind besonders wichtig, um die Ablagerung von Fremdkörpern, insbesondere Spänen mit scharfen Kanten, auf den betreffenden Flächen zu verhindern und das Abfallen derartiger Fremdkörper von diesen Flächen zu erleichtern.

Da die Energieführungskette in der Regel so eingesetzt wird, dass sie ein Untertrum bildet, das über einen Umlenkbogen in ein Obertrum übergeht, können sich Fremdkörper sowohl auf dem Untertrum als auch dem Obertrum ablagern. Es ist daher zweckmäßig, den Querschnitt der Kettenglieder 1 symmetrisch zu der die Mitte der beiden gegenüberliegenden Seitenwände 3 und 4 verbindenden Achse zu gestalten, so dass Fremdkörper im Bereich des Untertrums seitlich ebenso leicht von den Deckelwänden 5 wie im Bereich des Obertrums von den Bodenwänden 2 abrutschen können. Da die Seitenwände 3 und 4 im Wesentlichen vertikal ausgerichtet sind, ist eine konvexe Krümmung außerhalb der Übergangszonen 11 nicht erforderlich.

Wie insbesondere aus Fig. 2 hervorgeht, weisen sowohl die Außenseiten der sich teleskopartig überlappenden Bereiche der Kettenglieder 1 wie auch die sich in diesen Bereichen gegenüberliegenden Flächen in Schnitten senkrecht zu den Verschwenkachsen der Gelenkbolzen 6 und -öffnungen 7 zu diesen im Wesentlichen konzentrische Krümmungen auf, die sich über den gesamten Verschwenkwinkel erstrecken. Diese konvex gekrümmten Bereiche sind in den Deckelwänden 5 und den Übergangszonen zwischen den Deckelwänden 5 und den Seitenwänden 3 und 4 durch konkav gekrümmte Bereiche 12 miteinander verbunden. Sollten sich in den konkav gekrümmten Bereichen, die auch V-förmig ausgebildet sein können, Fremdkörper ansammeln, können diese leicht über die umfangsseitig konvex gekrümmte Oberfläche der Deckel- bzw. Bodenwände 5 bzw. 2 und Übergangszonen 11 abrutschen.

Die Bereiche der Deckelwand 5 und Bodenwand 2, die teleskopartig die Deckelwand 5 bzw. Bodenwand 2 eines benachbarten Kettenglieds 1 nach außen überlappen, sind als Abstreifer 13 bzw. 14 ausgebildet, wie insbesondere aus den vergrößerte Ansichten der Bereiche C und D in Fig. 2 zeigenden Figuren 3 und 4 hervorgeht. Die Abstreifer 13 und 14 weisen an ihren freien Endbereichen nach innen vorstehende Abschnitte 15 bzw. 16 auf, mit denen sie unter einer Vorspannung auf der Oberseite der Deckel- bzw. Bodenwand 5 des benachbarten Kettenglieds anliegen.

Wie aus den Figuren 2, 3 und 4 ebenfalls ersichtlich ist, weisen die von den Abstreifern 13 und 14 überlappten Bereiche der Deckel- bzw. Bodenwand 5 bzw. 2 sich quer zur Längsrichtung der Kettenglieder 1 erstreckende Taschen 17 auf, die zur Aufnahme von (in der Zeichnung nicht dargestellten) Traversen zwischen den Seitenwänden 3 und 4 zur Vergrößerung der Stabilität der Kettenglieder 1 dienen können.

Die Verbindungsbereiche zwischen den Seitenwänden 3 und 4 und der Deckelwand 5 eines Kettenglieds 1 sind, wie aus Fig. 1 hervorgeht, als Nut-Feder-Verbindung ausgebildet.

Im Folgenden wird anhand der Figuren 1 und 5-7 die Verbindung der Deckelwände 5 der Kettenglieder 1 mit den Seitenwänden 3 und 4 näher beschrieben.

Wie in Fig. 1 gezeigt ist, weisen die Deckelwände 5 sich von ihren Seitenrändern zu den Seitenwänden 3 und 4 heraberstreckende Befestigungslaschen 18 auf, die lösbar mit den Seitenwänden 3 und 4 verbindbar sind.

Die Verbindung ist als Rastverbindung ausgeführt, wobei die Befestigungslaschen 18 jeweils an ihrer Innenseite einen Vorsprung 19 aufweisen, der in eine an der betreffenden Seitenwand 3, 4 angeordnete, nach außen offene Ausnehmung 20 rastend eingreift. Dabei fluchtet die Außenseite der Befestigungslasche 18 mit dem Rand der Ausnehmung 20, so dass bei geschlossener Position, wie in Fig. 1 beim rechten Kettenglied 1 dargestellt, eine durchgehend stetige Krümmung der Außenseite des Kettenglieds in den Übergangszonen 11 zwischen der Deckelwand 5 und den Seitenwänden 3 und 4 gewährleistet ist.

In der Ausnehmung 20 ist eine Rastnase 21 vorgesehen, unter die der innen liegende Vorsprung 19 der Befestigungslasche 8 rastend greift.

Die Rastverbindung ist weiterhin derart ausgebildet, dass durch Druckbeaufschlagung der Außenseite der Befestigungslaschen 18 in Richtung auf die Bodenwand 2 die Vorsprünge 19 unter die Rastnasen 21 greifen und mit ihnen verrasten. Somit kommen die Deckelwände 5 mit einer Vorspannung zur Auflage auf die betreffenden Seitenwände 3 und 4.

Fig. 1 zeigt die Befestigung der Deckelwände 5 an den Seitenwänden 2 und 3 anhand der drei dargestellten Kettenglieder 1 in drei Schritten von links nach rechts wie folgt. Bei dem in Fig. 1 links dargestellten Kettenglied ist die Deckelwand 5 noch vom übrigen aus Bodenwand 2 und Seitenwänden 3 und 4 einstückig geformten, im Querschnitt U-förmigen Teil des Kettenglieds 1 gelöst. Die Deckelwand 5 wird dann auf die Seitenwände 3 und 4 aufgelegt, so dass in den Verbindungsbereichen Nut und Feder schon zumindest teilweise ineinander greifen und die Befestigungslaschen 18 mit ihren Vorsprüngen 19 auf den Rastnasen 21 in den Ausnehmungen 20 der Seitenwände 3 und 4 aufliegen. Diese Positionierung der Deckelwand 5 ist in Fig. 1 bei dem in der Mitte dargestellten Kettenglied 1 gezeigt. In einem weiteren Schritt werden durch Druckbeaufschlagung der Oberseite der Befestigungslaschen 18 deren Vorsprünge 19 mit den Rastnasen 21 in den Ausnehmungen 20 verrastet. Die Verbindungsbereiche zwischen der Deckelwand 5 und den Seitenwänden 3 und 4 liegen nun mit einer Vorspannung aneinander.

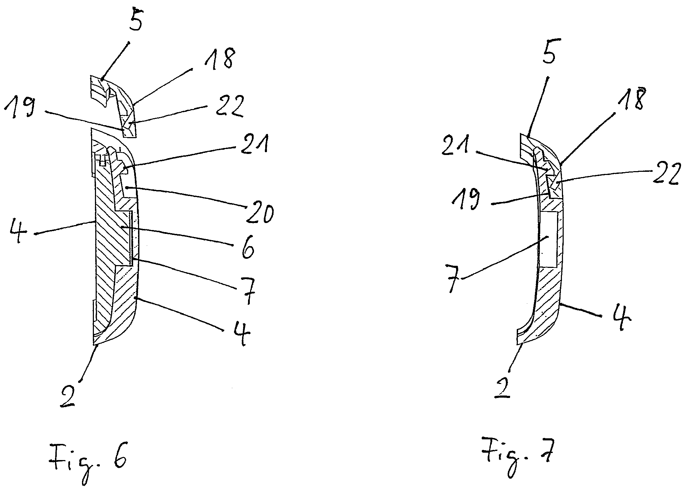

Die geöffnete Positionierung der Deckelwand 5 gegenüber einer Seitenwand 4 wird durch Fig. 6 noch einmal in Querschnittsdarstellung gezeigt. Die Querschnittsdarstellung beschränkt sich auf den linken Seitenbereich und führt etwa mittig durch die Befestigungslasche 18 und die Gelenkverbindung zweier gelenkig miteinander verbundener Kettenglieder, wie in Fig. 1 im Bereich des linken Kettenglieds 1 gezeigt.

Die vollständig geschlossene Positionierung der Deckelwand 5 auf der Seitenwand 4 zeigt die Schnittdarstellung in Fig. 7. Diese Schnittdarstellung führt etwa mittig durch die Befestigungslasche 18 und die Gelenköffnung 7 bei dem in Fig. 1 rechts dargestellten Kettenglied 1.

Wie weiterhin aus den Figuren 6 und 7 hervorgeht, ist an der Außenseite jeder Befestigungslasche 18 eine Nut 22 ausgebildet, die sich schräg von außen zur Bodenwand 2 hin in den Vorsprung 19 hineinerstreckt. Die Nut 22 ist zum Eingriff eines Werkzeugs, z. B. eines Schraubenziehers, ausgelegt, mit dem die Rastverbindung zwischen der Befestigungslasche 18 und der Seitenwand 4 durch Aufhebeln lösbar ist. Beim nach unten Drücken des Werkzeugs wird ein Drehmoment auf den Vorsprung 19 ausgeübt, der seinen unter die Rastnase 21 greifenden Bereich nach außen schwenkt, so dass die Rastverbindung leicht gelöst werden kann.

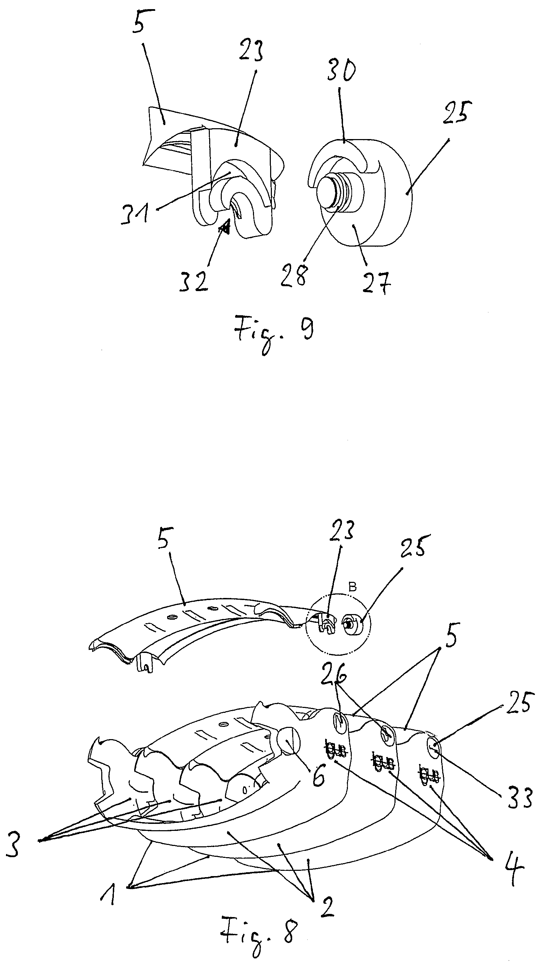

Die Figuren 8-11 zeigen ein weiteres Ausführungsbeispiel, das sich von dem in den Figuren 1-7 dargestellten Ausführungsbeispiel in der Art der Befestigung der Deckelwände 5 auf den Seitenwänden 3 und 4 unterscheidet.

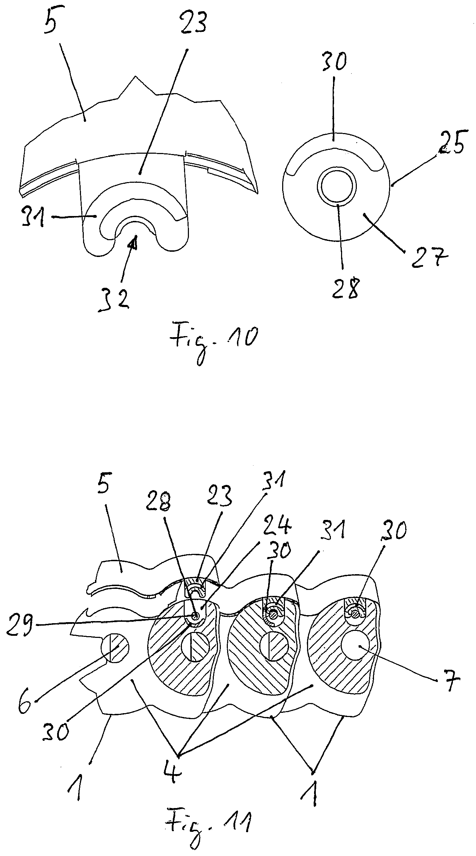

Wie aus der Fig. 1 etwa entsprechenden Fig. 8 hervorgeht, weisen die Deckelwände 5 an ihren Seiten ebenfalls Befestigungslaschen 23 auf, die zum Eingriff in zu den Deckelwänden 5 offene Ausnehmungen 24 in den Seitenwänden 3 und 4, die in Fig. 11 im Längsschnitt durch die Kettenglieder 1 gezeigt sind, ausgebildet sind.

Die Befestigungslaschen 23 sind in den Ausnehmungen 24 durch Verschlussteile 25, die genauer in Fig. 9 gezeigt sind, befestigbar.

Dazu ist in den Seitenwänden 3 und 4 jeweils eine Durchgangsöffnung 26 zur Ausnehmung 24 vorgesehen, in die das Verschlussteil 25 einsetzbar und mit der Befestigungslasche 23 verriegelbar ist. Die nach außen weisende Stirnfläche des Verschlussteils 25 ist fluchtend mit dem Rand der Durchgangsöffnung 26 ausgebildet, so dass sich in der Verschlussposition wiederum eine in der Übergangszone 11 zwischen Deckelwand 5 und Seitenwänden 3 und 4 stetig konvex gekrümmte Oberfläche ergibt.

In der Verschlussposition ist die nach innen weisende Stirnfläche 27 in einem Abstand von der innen liegenden Fläche der Ausnehmung 24 angeordnet, wobei zwischen diese Fläche und die nach innen weisende Stirnfläche 27 des Verschlussteils 25 die in die Ausnehmung 24 eingesetzte Befestigungslasche 23 greift.

Das Verschlussteil 25 ist, wie aus den Figuren 9 und 10 hervorgeht, im Wesentlichen rotationssymmetrisch ausgebildet. Es weist einen im Wesentlichen zylindrisch ausgebildeten zentralen Vorsprung 28 auf, mit dessen freien Endbereich es in einer in Fig. 11 gezeigten Öffnung 29 an der innen liegenden Seite der Ausnehmung 24 druckknopfartig verrastbar ist.

Zur Verriegelung der Befestigungslaschen 23 in den Ausnehmungen 24 der Seitenwände 3 und 4 weisen die Verschlussteile 25, wie aus den Figuren 9 und 10 hervorgeht, in einem äußeren Umfangsbereich ihrer nach innen weisenden Stirnfläche 27 eine Nockenkurve 30 auf, die in eine als komplementäre Nut 31 in der nach außen weisenden Seite der plattenförmigen Befestigungslasche 23 ausgebildete Nockenführung greift. Durch Drehen des Verschlussteils 25 in Uhrzeigerrichtung bewegt sich die Nockenkurve 30 in der Nut zu deren freiem Ende hin. Dazu ist die Nockenkurve 30 in der Öffnungsposition an der von der Deckelwand 5 weg weisenden Hälfte der Stirnfläche 27 des Verschlussteils 25 unterhalb des Vorsprungs 28 angeordnet.

Die Befestigungslasche 23 weist an ihrem freien Ende eine teilkreisförmige Nut 32 auf, mit der sie auf dem Vorsprung 28 des Verschlussteils 25 aufsetzbar ist, wobei die als Nockenführung vorgesehene Nut 31 oberhalb der teilkreisförmigen Nut 32 angeordnet ist. Somit kann die Befestigungslasche 23 in die Ausnehmung 24 der betreffenden Seitenwand 3 bzw. 4 von oben eingesetzt werden, nachdem das Verschlussteil 25 in die Durchgangsöffnung 26 in der Seitenwand 3 bzw. 4 eingesetzt und mit seinem Vorsprung 28 in der Öffnung 29 in der innen liegenden Seitenfläche der Ausnehmung 24 verrastet wurde. In der Öffnungsposition sind die Nockenkurve 30 und die als Nockenführung dienende Nut 31 so zueinander angeordnet, dass durch Drehen des Verschlussteils 25 im Uhrzeigersinn die Nockenkurve 30 in die als Nockenführung dienende Nut 31 einführbar ist.

Wie insbesondere aus Fig. 10 hervorgeht, ist die Nockenkurve 30 konzentrisch in Bezug auf den zylinderförmigen Vorsprung 28 ausgebildet, während die als Nockenführung dienende Nut 31 exzentrisch bezüglich der teilkreisförmigen Nut 32 und des darin eingesetzten Vorsprungs 28 des Verschlussteils 25 verläuft. Die Anordnung der als Nockenführung dienenden Nut 31 in Bezug auf die Nockenkurve 30 ist derart, dass bei Drehung des Verschlussteils 25 in Verschlussrichtung die Befestigungslasche 23 mit einer zunehmenden Vorspannung in Richtung auf die Bodenwand 2 des betreffenden Kettenglieds 1 hin gezogen wird. Die Deckelwand 5 liegt in der Verschlussposition daher mit einer Vorspannung an der betreffenden Seitenwand 4 mit einer Vorspannung an.

Die Befestigung der Deckelwand 5 an einer Seitenwand 4 wird in Fig. 11 in drei Schritten illustriert. Bei dem in Fig. 11 links dargestellten Kettenglied 1 ist die Deckelwand 5 von der Seitenwand 4 noch vollständig gelöst. Dabei ist das Verschlussteil 25 so in der Durchgangsöffnung 26 in der Seitenwand 4 angeordnet, dass die Nockenkurve 30 an seiner nach innen weisenden Stirnfläche 27 unterhalb des Vorsprungs 28 angeordnet ist.

In einem zweiten Schritt, der in Fig. 11 für das mittlere Kettenglied 1 gezeigt ist, wird die Deckelwand 5 auf die Seitenwand 4 aufgesetzt, wobei die Befestigungslasche 23 in die Ausnehmung 24 eingreift. Das Verschlussteil 25 wird dann im Uhrzeigersinn in Verschlussrichtung gedreht, wobei die Nockenkurve 30 in die als Nockenführung dienende, exzentrisch angeordnete Nut 31 hineinbewegt wird. Dabei wird die Befestigungslasche 23 mit der Deckelwand 5 zunehmend in Richtung auf die Bodenwand 2 hin gezogen, wobei die Nut-Feder-Verbindung zwischen der Deckelwand 5 und der Seitenwand 4 zunehmend zum Eingriff kommt.

Für das in Fig. 11 rechts dargestellte Kettenglied 1 ist die Verschlussposition gezeigt, in der die Nockenkurve 30 vollständig in die als Nockenführung dienende, exzentrisch verlaufende Nut 31 hineingezogen ist. Die Deckelwand 5 liegt nunmehr mit einer Vorspannung an der Seitenwand 4 an.

Wird das Verschlussteil 25 aus der Verschlussposition gegen den Uhrzeigersinn in die Öffnungsposition gedreht, wird die Deckelwand 5 von der Seitenwand 4 leicht angehoben, so dass sie, gegebenenfalls unter Zuhilfenahme eines Werkzeugs, das zwischen den beabstandeten Rändern der Deckelwand 5 und der Seitenwand 4 eingesetzt wird, die Deckelwand 5 von der Seitenwand 4 leicht gelöst werden kann.

Zum Drehen des Verschlussteils 25 ist an seiner nach außen weisenden Stirnseite eine in Fig. 8 angedeutete schlitzförmige Ausnehmung 33 vorgesehen, in die ein Schraubenzieher eingreifen kann.

### Bezugzeichenliste

- 1: Kettenglied
- 2: Bodenwand
- 3: Seitenwand
- 4: Seitenwand
- 5: Deckelwand
- 6: Gelenkzapfen
- 7: Gelenköffnung
- 8: Anschlag
- 9: Ausnehmung
- 10: Anschlagfläche
- 11: Übergangszone
- 12: Konkav gekrümmter Bereich
- 13: Abstreifer
- 14: Abstreifer
- 15: Abschnitte
- 16: Abschnitte
- 17: Tasche
- 18: Befestigungslasche
- 19: Vorsprung
- 20: Ausnehmung
- 21: Rastnase
- 22: Nut
- 23: Befestigungslasche
- 24: Ausnehmung
- 25: Verschlussteil
- 26: Durchgangsöffnung
- 27: Stirnfläche
- 28: Vorsprung
- 29: Öffnung
- 30: Nockenkurve
- 31: Nut
- 32: Nut
- 33: Ausnehmung

## Patentansprüche

1. Energieführungskette zur Führung von Kabeln, Schläuchen und dergleichen zwischen zwei relativ zueinander beweglichen Anschlusspunkten mit einer Anzahl gelenkig miteinander verbundener rohrförmiger Kettenglieder (1) die je eine Bodenwand (2) , daran seitlich anschließende gegenüberliegende Seitenwände (3, 4) und eine Deckelwand (5) aufweisen, wobei die Deckelwand (5) abnehmbar mit den Seitenwänden (3, 4) verbunden ist, die Seitenwände (3, 4) jeweils einen Gelenkzapfen (6) und eine Gelenköffnung (7) zur gelenkigen Verbindung benachbarter Kettenglieder (1) aufweisen, der Verschwenkwinkel in beiden Schwenkrichtungen durch Anschläge (8) begrenzt ist, die Deckelwände (5), Seitenwände (3, 4) und Bodenwände (2) benachbarter Kettenglieder (1) sich teleskopartig über den gesamten Verschwenkwinkel überlappen und die Bereiche der Deckelwand (5) und Bodenwand (2), die teleskopartig die Deckelwand (5) bzw. Bodenwand (2) eines benachbarten Kettenglieds (1) nach außen überlappen, als Abstreifer (13) ausgebildet sind, die auf der Deckelwand (5) bzw. Bodenwand (2) des benachbarten Kettenglieds (1) anliegen, **dadurch gekennzeichnet, dass** die Oberfläche der Deckelwände (5) und der Bodenwände (2), einschließlich ihrer als Abstreifer (13) ausgebildeten Bereiche, und zumindest der Übergangszonen (11) zwischen diesen Wänden und den Seitenwänden (3, 4) in Umfangsrichtung der rohrförmigen Kettenglieder (1) konvex gekrümmt sind.

2. Energieführungskette nach Anspruch 1, **dadurch gekennzeichnet, dass** die Außenseite der sich teleskopartig überlappenden Bereiche der Kettenglieder (1) in Schnitten senkrecht zu den Verschwenkachsen der Gelenkzapfen (6) und Gelenköffnungen (7) zu diesen im Wesentlichen konzentrische Krümmungen aufweisen.

3. Energieführungskette nach Anspruch 1 oder 2 , **dadurch gekennzeichnet, dass** die Deckelwand (5) und gegebenenfalls die Bodenwand (2), sollte diese separat ausgebildet sein, unter einer Vorspannung, an den Seitenwänden (3, 4) anliegen.

4. Energieführungskette nach einem der Ansprüche 1- 3, **dadurch gekennzeichnet, dass** die Verbindungsbereiche zwischen den Seitenwänden (3, 4) und der Deckelwand (5) und gegebenenfalls auch der Bodenwand (2), sollte diese separat ausgebildet sein, als Nut-Feder-Verbindung ausgebildet sind.

5. Energieführungskette nach einem der Ansprüche 1- 4, **dadurch gekennzeichnet, dass** die aneinander anliegenden Randabschnitte der Seitenwände (3, 4) und der Deckelwand (5) und gegebenenfalls auch der Bodenwand (2), sollte diese separat ausgebildet sein, sich stufenweise überkragen.

6. Energieführungskette nach einem der Ansprüche 1- 5, **dadurch gekennzeichnet, dass** die Deckelwände (5) sich von ihren Seitenrändern zu den Seitenwänden (3, 4) heraberstreckende Befestigungslaschen (18, 23) aufweisen, die lösbar mit den Seitenwänden (3, 4) verbindbar sind.

7. Energieführungskette nach einem der Ansprüche 1-6, **dadurch gekennzeichnet, dass** eine Rastverbindung zwischen den Befestigungslaschen (18) und den Seitenwänden (3, 4) der Kettenglieder (1) vorgesehen ist.

8. Energieführungskette nach Anspruch 7, **dadurch gekennzeichnet, dass** die Befestigungslaschen (18) an ihren Innenseiten einen Vorsprung (19) aufweisen, der in eine an der betreffenden Seitenwand (3, 4) angeordnete, nach außen offene Ausnehmung (20) rastend eingreift, wobei die Außenseite der Befestigungslasche (18) fluchtend mit dem Rand der Ausnehmung (20) ausgebildet ist.

9. Energieführungskette nach einem der Anspruch 7 oder 8, **dadurch gekennzeichnet, dass** an der Außenseite der Befestigungslasche (18) eine Nut (22) ausgebildet ist, die von der Seite der Deckelwand (5) sich schräg von außen in den Vorsprung (19) hineinerstreckt und zum Eingriff eines Werkzeugs ausgelegt ist, mit dem die Rastverbindung zwischen der Befestigungslasche (18) und der Seitenwand (3, 4) durch Aufhebeln lösbar ist.

10. Energieführungskette nach einem der Ansprüche 1 - 6, **dadurch gekennzeichnet, dass** die Befestigungslaschen (23) jeweils in eine zur Deckelwand (5) offene Ausnehmung (24) in den Seitenwänden (3, 4) eingreifen und darin derart befestigbar sind, dass die Deckelwand (5) unter einer Vorspannung auf den Seitenwänden (3, 4) aufliegt.

11. Energieführungskette nach Anspruch 10, **dadurch gekennzeichnet, dass** in der innen liegenden Fläche der Ausnehmung (24) eine senkrecht in die betreffende Seitenwand (3, 4) eingelassene Öffnung (29) vorgesehen ist, in die ein im Wesentlichen rotationssymmetrisches Verschlussteil (25) mit einem zentralen Vorsprung (28) lösbar einrastbar ist, wobei das Verschlussteil (25) von außen in eine Durchgangsöffnung (26) zur Ausnehmung (24) einsetzbar ist, seine nach außen weisende Stirnfläche fluchtend mit dem Rand der Durchgangsöffnung (26) ausgebildet ist und seine nach innen weisende Stirnfläche (27) in einem Abstand von der innen liegenden Fläche der Ausnehmung (24) angeordnet ist, zwischen diese Fläche und die nach innen weisende Stirnfläche (27) des Verschlussteils (25) ein Bereich der in die Ausnehmung (24) eingesetzten Befestigungslasche (23) greift und an diesem Bereich und der nach innen weisenden Stirnfläche (27) des Verschlussteils (25) ein Nocken und eine Nockenführung derart miteinander in Eingriff stehen, dass bei Drehung des Verschlussteils (25) in Verschlussrichtung die Befestigungslasche (23) mit einer zunehmenden Vorspannung in Richtung auf die Bodenwand (2) gezogen wird.

12. Energieführungskette nach Anspruch 11, **dadurch gekennzeichnet, dass** der Nocken in Form einer konzentrisch an der nach innen weisenden Stirnfläche (27) des Verschlussteils (25) angeordneten Nockenkurve (30) ausgebildet ist, die sich in Verschlussrichtung verjüngt, wobei die Nockenführung als exzentrisch zur Öffnung (29) angeordnete Nut (31) ausgebildet ist, die sich ebenfalls in Verschlussrichtung verjüngt.

13. Energieführungskette nach Anspruch 11 oder 12, **dadurch gekennzeichnet, dass** der Vorsprung (28) des Verschlussteils (25) im Wesentlichen zylindrisch ausgebildet ist und an seinem freien Ende druckknopfartig in der Öffnung (29) an der Innenseite der Ausnehmung (24) verrastbar ist, wobei der Nocken bzw. die Nockenführung in der Öffnungsposition an der von der Deckelwand (5) wegweisenden Hälfte der Stirnfläche (27) des Verschlussteils (25) unterhalb des Vorsprungs (28) angeordnet ist und die Befestigungslasche (23) an ihrem freien Ende eine teilkreisförmige Nut (32) aufweist, mit der sie auf den Vorsprung (28) des Verschlussteils (25) aufsetzbar ist und wobei die an dem betreffenden Bereich der Befestigungslasche (23) vorgesehene Nockenführung bzw. der Nocken oberhalb der teilkreisförmigen Nut (32) angeordnet ist, so dass die Befestigungslasche (23) in die Ausnehmung (24) in der betreffenden Seitenwand (3, 4) von oben eingesetzt werden kann, nachdem das Verschlussteil (25) in die Durchgangsöffnung (26) in der Seitenwand (3, 4) eingesetzt und mit seinem Vorsprung (28) an der innen liegenden Fläche der Ausnehmung (24) verrastet wurde, und in der Öffnungsposition der Nocken und die Nockenführung so zueinander angeordnet sind, dass durch Drehen des Verschlussteils (25) in Verschlussrichtung der Nocken in die Nockenführung einführbar ist.

14. Energieführungskette nach Anspruch 13, **dadurch gekennzeichnet, dass** der Nocken am Verschlussteil (25) angebracht und die Befestigungslasche (23) plattenförmig ausgebildet ist, wobei die Nockenführung in der Befestigungslasche (23) ausgehend von deren freiem Ende um die teilkreisförmige Nut (32) herum ausgebildet ist.

15. Energieführungskette nach einem der Ansprüche 11 - 14, **dadurch gekennzeichnet, dass** an der nach außen weisenden Stirnseite des Verschlussteils (25) eine Ausnehmung zum Eingriff eines Werkzeugs vorgesehen ist, mit dem das Verschlussteil (25) drehbar ist.

## Claims

1. An energy guide chain for guiding cables, hoses and the like between two connection points movable relative to each other, comprising a number of hingedly interconnected tubular chain links (1) which each have a bottom wall (2), oppositely disposed side walls (3, 4) laterally adjoining same and a top wall (5), wherein the top wall (5) is removably connected to the side walls (3, 4), the side walls (3, 4) each have a respective hinge pin (6) and a hinge opening (7) for hingedly connecting adjacent chain links (1), the pivotal angle in both pivotal directions is limited by abutments (8), the top walls (5), side walls (3, 4) and bottom walls (2) of adjacent chain links (1) are in telescopically overlapping relationship over the entire pivotal angle and the regions of top wall (5) and the bottom wall (2), which telescopically outwardly overlap the top wall (5) and the bottom wall (2), respectively, of an adjacent chain link (1) are in the form of scrapers (13), which bear against the top wall (5) and the bottom wall (2), respectively, of the adjacent chain link (1), **characterised in that** the surface of the top walls (5) and the bottom walls (2), including the regions formed as scrapers, and at least of the transitional zones (11) between those walls and the side walls (3, 4) are convexly curved in the peripheral direction of the tubular chain links (1).

2. An energy guide chain as set forth in claim 1 **characterised in that** the outsides of the telescopically overlapping regions of the chain links (1) in sections perpendicularly to the pivot axes of the hinge pins (6) and the hinge openings (7) have curvatures which are substantially concentric with respect thereto.

3. An energy guide chain as set forth in claim 1 or 2 **characterised in that** the top wall (5) and optionally the bottom wall (2), if it should be formed separately, bear under a prestressing against the side walls (3, 4).

4. An energy guide chain as set forth in one of claims 1 through 3 **characterised in that** the connecting regions between the side walls (3, 4) and the top wall (5) and optionally also the bottom wall (2), if it should be formed separately, are in the form of a groove-and-tongue connection.

5. An energy guide chain as set forth in one of claims 1 through 4 **characterised in that** the edge portions, which bear against each other, of the side walls (3, 4) and the top wall (5) and optionally also of the bottom wall (2), if it should be formed separately, overhang each other stepwise.

6. An energy guide chain as set forth in one of claims 1 through 5 **characterised in that** the top walls (5) have fixing tongues (18, 23) which extend down from their side edges to the side walls (3, 4) and which can be releasably connected to the side walls (3, 4).

7. An energy guide chain as set forth in one of claims 1 through 6 **characterised in that** there is provided a latching connection between the fixing tongues (18) and the side walls (3, 4) of the chain links (1).

8. An energy guide chain as set forth in claim 7 **characterised in that** the fixing tongues (18) at their insides have a projection (19) which latchingly engages into an outwardly open recess (20) arranged at the side wall (3, 4) in question, the outside of the fixing tongue (18) being in alignment with the edge of the recess (20).

9. An energy guide chain as set forth in one of claims 7 or 8 **characterised in that** provided at the outside of the fixing tongue (18) is a groove (22) which extends from the side of the top wall (5) inclinedly outwardly into the projection (19) and is adapted for the engagement of a tool with which the latching connection between the fixing tongue (18) and the side wall (3, 4) can be released by levering open.

10. An energy guide chain as set forth in one of claims 1 through 6 **characterised in that** the fixing tongues (23) respectively engage into a recess (24) in the side walls (3, 4), that is open towards the top wall (5), and can be fixed therein in such a way that the top wall (5) bears on the side walls (3, 4) under a prestressing.

11. An energy guide chain as set forth in claim 10 **characterised in that** provided in the inwardly disposed surface of the recess (24) is an opening (29) which is let perpendicularly into the side wall (3, 4) in question and into which a substantially rotationally symmetrical closure portion (25) with a central projection (28) is releasably latchable, wherein the closure portion (25) can be inserted from the outside into a through opening (26) to the recess (24), its outwardly facing end face is in alignment with the edge of the through opening (26) and its inwardly facing end face (27) is arranged at a spacing from the inwardly disposed surface of the recess (24), a region of the fixing tongue (23) which is fitted into the recess (24) engages between said surface of the recess and the inwardly facing end face (27) of the closure portion (25) and at said region and the inwardly facing end face (27) of the closure portion (25) a cam and a cam guide are in engagement with each other in such a way that upon rotation of the closure portion (25) in the closure direction the fixing tongue (23) is pulled with an increasing prestressing in a direction towards the bottom wall (2).

12. An energy guide chain as set forth in claim 11 **characterised in that** the cam is in the form of a cam curve (30) which is arranged concentrically at the inwardly facing end face (27) of the closure portion (25) and which narrows in the closure direction, wherein the cam guide is in the form of a groove (31) which is arranged eccentrically relative to the opening (29) and which also narrows in the closure direction.

13. An energy guide chain as set forth in claim 11 or claim 12 **characterised in that** the projection (28) of the closure portion (25) is of a substantially cylindrical configuration and is latchable at its free end in a push button-like fashion in the opening (29) at the inside of the recess (24), wherein the cam and the cam guide in the open position is arranged at the half, facing away from the top wall (5), of the end face (27) of the closure portion (25) beneath the projection (28) and the fixing tongue (23) at its free end has a part-circular groove (32) with which it can be fitted on to the projection (28) of the closure portion (25) and wherein the cam or the cam guide provided at the region in question of the fixing tongue (23) is arranged above the part-circular groove (32) so that the fixing tongue (23) can be fitted from above into the recess (24) in the side wall (3, 4) in question after the closure portion (25) has been fitted into the through opening (26) in the side wall (3, 4) and has been latched with its projection (28) at the inwardly disposed surface of the recess (24) and in the open position the cam and the cam guide are so arranged relative to each other that the cam can be introduced into the cam guide by rotation of the closure portion (25) in the closure direction.

14. An energy guide chain as set forth in claim 13 **characterised in that** the cam is mounted on the closure portion (25) and the fixing tongue (23) is of a plate-shaped configuration, wherein the cam guide is provided in the fixing tongue (23) around the part-circular groove (32) starting from the free end of the fixing tongue.

15. An energy guide chain as set forth in one of claims 11 through 14 **characterised in that** provided at the outwardly facing end of the closure portion (25) is a recess for the engagement of a tool with which the closure portion (25) is rotatable.

## Revendications

1. Chaîne de guidage d'énergie pour le guidage de câbles, flexibles et similaires entre deux points de raccordement mobiles l'un par rapport à l'autre, comportant une pluralité de maillons de chaîne tubulaires (1) reliés articulés les uns aux autres, présentant respectivement une paroi de base (2), des parois latérales opposées (3, 4) se joignant latéralement à la paroi de base, et une paroi de capot (5), ladite paroi de capot (5) étant reliée amovible aux parois latérales (3, 4), les parois latérales (3, 4) présentant respectivement un pivot (6) et une ouverture d'articulation (7) pour la liaison articulée des maillons de chaîne adjacents (1), l'angle de pivotement dans les deux sens de pivotement étant limité par des butées (8), les parois de capot (5), les parois latérales (3, 4) et les parois de base (2) des maillons de chaîne adjacents (1) se chevauchant de façon télescopique sur tout l'angle de pivotement, et les zones de la paroi de capot (5) et de la paroi de base (2) chevauchant de façon télescopique et vers l'extérieur la paroi de capot (5) respectivement la paroi de base (2) d'un maillon de chaîne adjacent (1), étant réalisées en forme de racleurs (13) étant appliqués contre la paroi de capot (5) respectivement contre la paroi de base (2) du maillon de chaîne adjacent (1), **caractérisée en ce que** la surface des parois de capot (5) et des parois de base (2) y compris leur zones réalisées en forme de racleurs (13), et au moins des zones de transition (11) entre ces parois et les parois latérales (3, 4) sont courbées de façon convexe dans la direction périphérique des maillons de chaîne tubulaires (1).

2. Chaîne de guidage d'énergie selon la revendication 1, **caractérisée en ce que** les faces extérieures des zones des maillons de chaîne (1) se chevauchant de façon télescopique présentent, dans des sections normales aux axes de pivotement des pivots (6) et des ouvertures d'articulation (7), des courbures essentiellement concentriques à ceux-ci.

3. Chaîne de guidage d'énergie selon la revendication 1 ou 2, **caractérisée en ce que** la paroi de capot (5) et, le cas échéant, la paroi de base (2), lorsqu'elle est formée séparément, sont appliquées contre les parois latérales (3, 4) sous une précontrainte.

4. Chaîne de guidage d'énergie selon l'une quelconque des revendications 1 à 3, **caractérisée en ce que** les zones de raccordement entre les parois latérales (3, 4) et la parois de capot (5) et, le cas échéant, aussi la paroi de base (2), lorsqu'elle est formée séparément, sont formées comme raccord à languette et rainure.

5. Chaîne de guidage d'énergie selon l'une quelconque des revendications 1 à 4, **caractérisée en ce que** les parties de bord adjacentes les unes aux autres des parois latérales (3, 4) et de la paroi de capot (5) et, le cas échéant, aussi de la paroi de base (2), lorsqu'elle est formée séparément, graduellement font saillie les unes au delà les autres.

6. Chaîne de guidage d'énergie selon l'une quelconque des revendications 1 à 5, **caractérisée en ce que** les parois de capot (5) comportent des pattes de fixation (18, 23) s'étendant de manière descendante de leurs bords latéraux (3, 4) vers les parois latérales (3, 4), lesdites pattes de fixation pouvant être reliées de manière amovible aux parois latérales (3, 4).

7. Chaîne de guidage d'énergie selon l'une quelconque des revendications 1 à 6, **caractérisée en ce qu'**entre les pattes de fixation (18, 23) et les parois latérales (3, 4) des maillons de chaîne (1) est prévue une liaison à encliquetage.

8. Chaîne de guidage selon la revendication 7, **caractérisée en ce que** les pattes de fixation (18) comportent à leurs faces intérieures une saille (19) qui engage par encliquetage dans une évidement (20) disposée sur la paroi latérale respective (3, 4) et ouverte vers l'extérieur, la face extérieure de la patte de fixation (18) étant formée de manière alignée avec le bord de l'évidement (20).

9. Chaîne de guidage d'énergie selon l'une quelconque des revendications 7 ou 8, **caractérisée en ce que** sur la face extérieure de la patte de fixation (18) est formée une rainure (22) qui s'étend obliquement de l'extérieur vers l'intérieur de la saille (18) depuis le côté de la paroi de capot (5) et qui est conçue pour l'engagement d'un outil par lequel la liaison à encliquetage entre la patte de fixation (18) et la paroi latérale (3, 4) peut être détachée par levage.

10. Chaîne de guidage d'énergie selon l'une quelconque des revendications 1 à 6, **caractérisée en ce que** les pattes de fixation (23) engagent respectivement dans une évidement (24) ouverte vers la paroi de capot (5) dans les parois latérales (3, 4) et peuvent être fixées dans cette ouverture de telle façon que la paroi de capot (5) repose sur les parois latérales (3, 4) sous une précontrainte.

11. Chaîne de guidage d'énergie selon la revendication 10, **caractérisée en ce que** dans la face de l'évidement (24) située à l'intérieur est prévue une ouverture (29) formée verticalement dans la paroi latérale respective (3, 4), dans ladite ouverture peut encliqueter de manière amovible un élément de fermeture (25) essentiellement symétrique en rotation par une saille centrale (28), ledit élément der fermeture (25) pouvant être inséré dans une ouverture de passage (26) pour l'accès à l'évidement (24) depuis l'extérieur, la face frontale orientée vers l'extérieur dudit élément de fermeture étant alignée avec le bord de l'ouverture de passage (26), et la face frontale orientée vers l'intérieur (27) dudit élément de fermeture étant arrangée à une distance de la face frontale orientée vers l'intérieur de l'évidement (24), une partie de la patte de fixation (23) insérée dans l'évidement (24) engageant entre cette face et la face frontale orientée vers l'intérieur (27) de l'élément de fermeture, et une came et un guide à came engageant l'une dans l'autre sur cette partie et sur la face frontale orientée vers l'intérieur (27) de l'élément de fermeture (25) de telle façon que lors de la rotation de l'élément de fermeture (25) dans le sens de fermeture, la patte de fixation (23) est tirée vers la paroi de base (2) sous une précontrainte croissante.

12. Chaîne de guidage d'énergie selon la revendication 10, **caractérisée en ce que** la came est réalisé en forme de courbe de came (30) disposée sur la face frontale orientée vers l'intérieur (27) de l'élément de fermeture (25) de manière concentrique et se réduite dans le sens de fermeture, ledit guide de came étant réalisé en forme de rainure (31) disposée de manière excentrique par rapport à l'orifice (29), ladite rainure se réduisant également dans le sens de fermeture.

13. Chaîne de guidage d'énergie selon la revendication 11 ou 12, **caractérisée en ce que** la saillie (28) de l'élément de fermeture (25) est formé de façon essentiellement cylindrique et peut être fixé, à son extrémité libre, dans l'ouverture (29) prévue sur la face intérieure de l'évidement (24), par encliquetage à la manière d'un bouton poussoir, la came respectivement le guide de came, dans la position ouverte, étant disposés sur la moitié de la face frontale (27) de l'élément de fermeture (25) détournée de la paroi de capot (5) et au-dessous de la saillie (28), et la patte de fixation (23) comportant à son extrémité libre une rainure en forme de cercle partiel (32), par laquelle la patte de fixation peut être placée sur la saille (28) de l'élément de fermeture, et le guide de came respectivement la came prévus dans la zone respective de la patte de fixation (23) étant disposés au-dessus de la rainure en forme de cercle partiel (32) de sorte que la patte de fixation (23) peut être insérée par le haut dans l'évidement (24) prévue dans la paroi latérale respective (3, 4), après l'élément de fermeture (25) à été inséré dans l'ouverture de passage (26) dans la paroi latérale (3, 4) et fixé par sa saillie (28) sur la face orientée vers l'intérieur de l'évidement (24) par encliquetage, et la came et le guide de came, dans la position ouverte, étant disposés l'une par rapport à l'autre de telle façon que la came peut être insérée dans le guide de came en tournant ledit élément de fermeture (25).

14. Chaîne de guidage d'énergie selon la revendication 13, **caractérisée en ce que** la came est montée sur l'élément de fermeture (25), et la patte de fixation (23) est réalisée en forme de plaque, le guide de came dans la patte de fixation (23) étant formé autour de la rainure en forme de cercle partiel (32), à partir de l'extrémité libre de celle-ci.

15. Chaîne de guidage d'énergie selon la revendication 11 ou 14, **caractérisée en ce que** sur la face frontale orientée vers l'extérieur de l'élément de fermeture (25) est prévue une évidement pour l'engagement d'un outil par lequel ledit élément de fermeture peut être tourné.
